# EUROPEAN PATENT SPECIFICATION

(11) **EP 1 962 266 B1**
(45) Date of publication and mention of the grant of the patent: **18.04.2012**
(21) Application number: 08151743.5
(22) Date of filing: 21.02.2008
(51) Int. Cl.: G09G 3/20, G09G 3/32

(54) **Organic light emitting diode display device and driving method thereof**
Organische lichtemittierende Diodenanzeigevorrichtung und Verfahren zu ihrer Ansteuerung
Dispositif d'affichage à diodes électroluminescentes organiques et procédé de commande correspondant

(30) Priority: 23.02.2007 KR 20070018696
(43) Date of publication of application: 27.08.2008
(73) Proprietor: Samsung Mobile Display Co., Ltd., Suwon-si Gyeonggi-do (KR)
(72) Inventor: Shin, Hye-Jin, Gyeonggi-do (KR); Choi, Jin-Hyun, Gyeonggi-do (KR)
(74) Representative: Hengelhaupt, Jürgen

(56) References cited:
- US-A1- 2001 050 757
- US-A1- 2003 231 160

## Description

### BACKGROUND OF THE INVENTION

### 1. Field of the Invention

Exemplary embodiments relate to an organic light emitting diode (OLED) display device and driving methods thereof and, more particularly, to an OLED display device having improved display and visibility across varying ambient light conditions and driving methods thereof.

### 2. Description of the Related Art

Various flat display technologies, i.e., plasma display panels (PDPs), liquid crystal displays (LCDs) and OLED displays, are becoming widely used over other display devices, e.g., cathode ray tubes (CRTs), due to their small size, reduced weight and volume and energy efficiency characteristics. When comparing the various flat display technologies, however, the OLED displays may provide better luminance feature and color purity because OLED displays use an organic compound as an emitting material. Further, due to their reduced size and weight, the OLED displays may be incorporated into portable display devices, e.g., cellular phones, personal digital assistant devices, portable multimedia players and the like. Since the portable display devices may be exposed to varying light conditions, e.g., exposed to outdoor visible light, quality and visibility (or viewability) of images displayed on the portable display device may be diminished. In other words, brightness of images displayed on the portable display device may be diminished (or faded out) under light, e.g., solar light, because surrounding or ambient light and/or illumination intensity may be brighter than the brightness of the displayed image.

US 2003/231160 A1 discloses a display device, in which a colour display is performed by adding data of a predetermined level to pixel data of each emission colour inputted according to an image to be displayed. Switching is performed between colour display based on such summed pixel data and colour display based on the original pixel data, according to ambient illuminance measured.

US 2001/050757 A1 is directed to a liquid crystal display panel for displaying an image in accordance with an input of a chrominance signal, a sensor for sensing light characteristics of external light, and a chrominance signal converter for converting a chrominance signal to be inputted into an image display section in accordance with an output of the sensor. The chrominance signal converter includes a target display colour setting section for setting a colour to display as an image agreeable with chromatic adaptation characteristics of human, according to the output of the sensor, and a colour reproduction section for reproducing a target colour set by the target display colour setting section. Provided is an image with colour tone, in which no change is sensed by a user, even if external light condition, that is the light characteristics of the external light are varied. However, a display which always changes the colour tone such that the user senses no change is cumbersome and time consuming.

Therefore, there is still a need for the development of an OLED display having improved display and visibility across varying ambient light conditions, and methods of driving such devices.

### SUMMARY OF THE INVENTION

Exemplary embodiments are related to an OLED display device and driving methods thereof, which substantially overcome one or more of the problems due to the limitations and disadvantages of the related art.

It is therefore a feature of exemplary embodiments to provide an OLED display device having improved display and visibility across varying ambient light conditions.

According to an exemplary embodiment of the present invention, an OLED display device according to claim 1 is disclosed.

The changed input image data in the third mode may be set to a lower value than the second mode.

The second operator unit may be adapted to extract the changed input image data by linearly interpolating between two values of the pixel saturation data stored in the reference look-up table unit, if a pixel saturation data that is not stored in the reference look-up table unit is input.

According to another exemplary embodiment, a method for driving an OLED display device according to claim 4 is disclosed.

The method may further include extracting the changed input image data by linearly interpolating between two values of the pixel saturation data among values stored in the reference look-up table unit if a pixel saturation data not stored in the reference look-up table unit is input.

The method may further include selecting a signal for selecting a mode in the selection signal corresponding to a weak intensity of light, so that the input image data may remain unchanged. The method may further include selecting a signal for selecting a mode in the selection signal corresponding to a large intensity of light, so as to change the input image data.

The method may further include storing the input image data and generating a data signal corresponding to the stored input image data.

### BRIEF DESCRIPTION OF THE DRAWINGS

The above and other features and advantages of the exemplary embodiments will become more apparent to those of ordinary skill in the art by describing in detail exemplary embodiments thereof with reference to the attached drawings, of which:

FIG. 1 illustrates a schematic view of an OLED display device according to an exemplary embodiment;

FIG. 2 illustrates a schematic view of an exemplary data conversion unit as shown in FIG. 1;

FIG. 3A to FIG. 3D illustrate matrices of a desired saturation data in a subpixel calculated in a first operator unit by using a saturation variable matrix as shown in FIG. 2; and

FIG. 4 illustrates a flow chart of a method for driving a data conversion unit as shown in FIG. 2.

### DETAILED DESCRIPTION OF THE INVENTION

Korean Patent Application No. 10-2007-0018696, filed on February 23, 2007, in the Korean Intellectual Property Office, and entitled: "Organic Light Emitting Diodes Display Device and Driving Method Thereof," is incorporated by reference herein in its entirety.

Exemplary embodiments will now be described more fully hereinafter with reference to the accompanying drawings; however, the exemplary embodiments may be embodied in different forms and should not be construed as limited to the embodiments set forth herein. Rather, these exemplary embodiments are provided so that this disclosure will be thorough and complete, and will fully convey the scope of the invention to those skilled in the art.

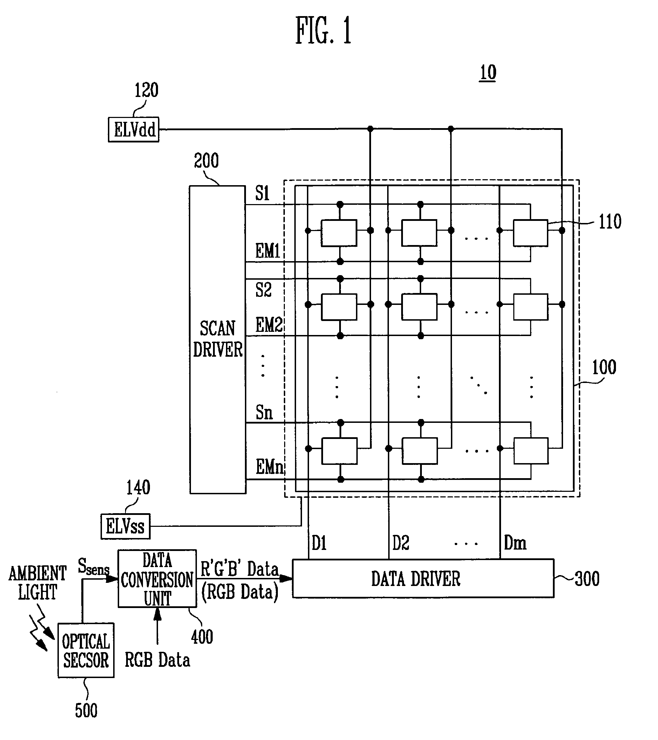

Referring to FIG. 1, an OLED display device 10 may include a pixel unit 100, a scan driver 200, a data driver 300, a data conversion unit 400 and an optical sensor 500. Other devices and/or elements may be included or excluded in the OLED display device 10.

The pixel unit 100 may include a plurality of pixels 110 connected to scan lines (S1 to Sn), light emission control lines (EM1 to EMn) and data lines (D1 to Dm). Further, a single pixel 110 may have one OLED and may be composed of at least two subpixels for emitting different color light, e.g., red, green and blue.

The pixel unit 100 may display an image to correspond to a first power source (ELVdd) 120 supplied from the outside and a second power source (ELVss) 140 supplied from the outside. The pixel unit 100 may also display images corresponding to scan signals supplied by the scan lines S1 to Sn and light emission control signals supplied by the emission control lines EM 1 to EMn generated from the scan driver 200, and data signals supplied by the data lines D1 to Dm generated from the data driver 300.

The scan driver 200 may generate the scan signals and the light emission control signals. The scan signals generated in the scan driver 200 may be sequentially supplied to the scan lines (S1 to Sn) and the light emission control signals may be sequentially supplied to each of the light emission control lines (EM1 to EMn). The scan signals and the emission control signals may also be non-sequentially supplied to the scan lines S1 to Sn and the emission control lines EM1 to EMn, respectively.

The data driver 300 may receive an image data (R'G'B' Data or RGB Data) converted by the control unit 400 and may generate data signals corresponding to the received image data. The data signals generated in the data driver 300 may be supplied to the pixels 110 through the data lines (D1 to Dm) to synchronize with the scan signal. The data signals may also be supplied to the data lines D1 to Dm in a non-synchronization manner with the scan signal.

The optical sensor 500 may include an optical sensor element, e.g., a transistor or a photodiode, to sense an intensity of ambient light. The optical sensor 500 may also generate an optical sensor signal (Ssens) corresponding to the sensed intensity of ambient light. The optical sensor signal (Ssens) generated in the optical sensor 500 may then be supplied to the data conversion unit 400.

The data conversion unit 400 may compare the optical sensor signal (Ssens) to predetermined reference values with to generate a selection signal (Ssel) for selecting one of at least three modes, e.g., a first intensity light mode, a second intensity light mode and a third intensity light mode. The predetermined reference values may comprise a minimum reference value (weak light intensity) and a maximum reference value (large light intensity). Further, the data conversion unit 400 may store an initial input image data (RGB Data) or a changed input image data (R'G'B' Data). The initial input image data (RGB Data) may be a signal indicating no change to the input image data (RGB Data) when the signal in the selection signal corresponds to a weak intensity of ambient light, i.e. when the optical sensor signal (Ssel) is below or equal to the minimum reference value. The changed input image data (R'G'B' Data) may be a signal indicating a change to the initial input image data (RGB Data) when the signal in the selection signal corresponds to a large intensity of ambient light, i.e. when the optical sensor signal (Ssel) is above the minimum reference value Further, the data conversion unit 400 may generate the changed input image data (R'G'B' Data) so as to control the saturation and/or luminance of the initial input image data (RGB Data) and, thus, enhance visibility. Further, when the changed input image data (R'G'B' Data) is generated, the data conversion unit 400 may provide an improved response to light intensity variations in the environment by selecting different modes, e.g., modes to control the initial input image data (RGB Data) corresponding to the optical sensor signal (Ssens).

The data conversion unit 400 may also perform other operations. For example, determining whether or not to change the initial input image data (RGB Data), generating the changed data (R'G'B' Data) according to the saturation and/or luminance value of the initial input image data (RGB Data) and/or storing the generated changed input image data (R'G'B' Data).

The selection signal (Ssel) generated in the data conversion unit 400 may then be input to the data driver 300. In particular, the initial input image data (RGB Data) or the changed input image data (R'G'B' Data) stored in the data conversion unit 400 may be input to the data driver 300.

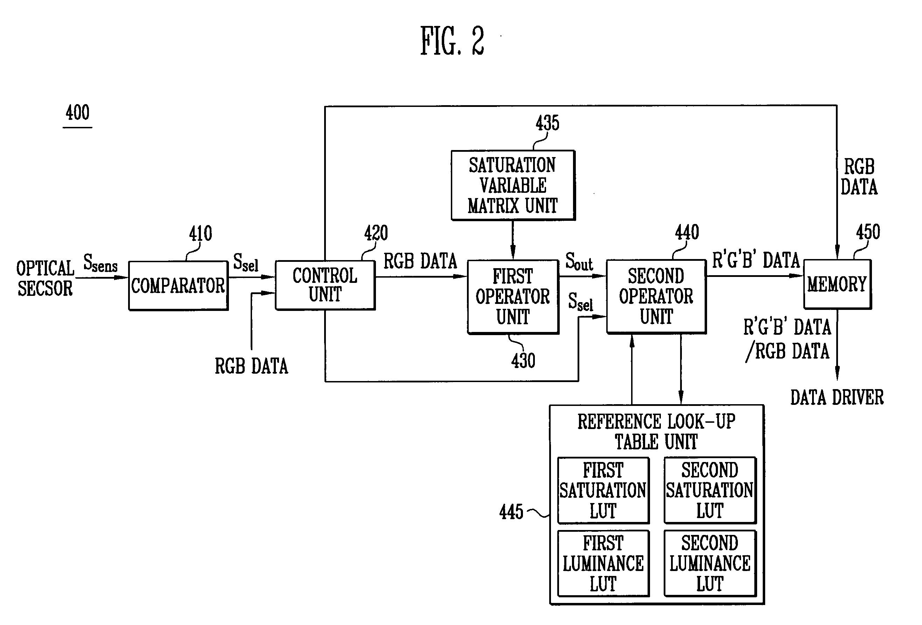

Referring to FIG. 2, the data conversion unit 400 may include a comparator 410, a control unit 420, a first operator unit 430, a saturation variable matrix unit 435, a second operator unit 440, a reference look-up table unit 445 and a memory 450. Other devices and/or elements may be included or excluded in the data conversion unit 400.

The comparator 410 may compare the predetermined reference values with the optical sensor signal (Ssens) supplied from the optical sensor 500 and may output the selection signal (Ssel) for selecting one of at least three modes. The comparator 410 may set at least three modes on the basis of the predetermined reference values, which may correspond to the intensity of the optical sensor signal (Ssens). The comparator 410 may also set more modes besides three modes.

In a first mode, the optical sensor signal (Ssens) may be equal to or below the minimum reference value of the predetermined reference values, corresponding to the weakest intensity of ambient light. Accordingly, the initial input image data (RGB Data) may not be changed in the first mode. The comparator 410 may therefore output the selection signal (Ssel) corresponding to the first mode.

In a second mode, the optical sensor signal (Ssens) may be greater than or equal to the maximum reference value of the predetermined reference values, corresponding to the largest intensity of ambient light. Accordingly, the initial input image data (RGB Data) may be changed so as to control the saturation and/or luminance in the second mode. The comparator 410 may therefore output the selection signal (Ssel) corresponding to the second mode.

In a third mode, the optical sensor signal (Ssens) may correspond to a value between the maximum reference value and the minimum reference value of the predetermined reference values. Accordingly, the initial input image data (RGB Data) may be changed so as to control the saturation and/or luminance in the third mode. The comparator 410 may therefore output the selection signal (Ssel) corresponding to the third mode. Further, the changed input image data (RGB Data) in the third mode may be set to a lower value than the second mode.

The selection signal (Ssel) output from the comparator 410 (in at least one mode) may then be input to the control unit 420. The control unit 420 may determine whether or not to change the initial input image data (RGB Data), so as to correspond to the selection signal (Ssel) input from the comparator 410.

The control unit 420 may transmit the initial input image data (RGB Data) to the first operator unit 430 or, alternatively, may transmit the initial input image data (RGB Data) to be stored in the memory 450. The transmission to the first operator unit 430 or to the memory 450 may depend on whether or not the initial input image data (RGB Data) is changed.

In an implementation, the control unit 420 may store the initial input image data (RGB Data) in the memory 450 if the intensity of the ambient light is a weak, e.g., the selection signal (Ssel) corresponding to the first mode is supplied. If, however, the selection signal (Ssel) corresponds to the second mode or the third mode, the control unit 420 may transmit the initial input image data (RGB Data) to the first operator unit 430.

The first operator unit 430 may perform an operation by using a saturation variable matrix A to generate a pixel saturation data (Sout) corresponding to the initial input image data (RGB Data) transmitted from the control unit 420. The first operator unit 430 may perform an operation on an input data (Rin, Gin, Bin) and the saturation variable matrix A in each of the subpixels, which may be included in the initial input image data (RGB Data). The first operator unit 430 may further calculate a desired saturation data (Rs, Gs, Bs) in every subpixel and may use the calculated saturation data (Rs, Gs, Bs) to generate the pixel saturation data (Sout).

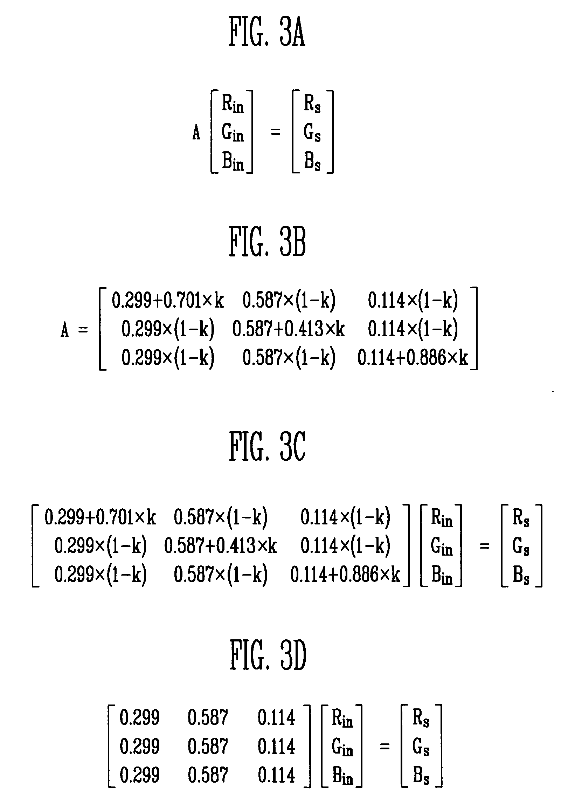

A method of calculating the desired saturation data (Rs, Gs, Bs) in every subpixel will be described later as illustrated in FIG. 3A to FIG. 3D.

The pixel saturation data (Sout) may be calculated from the desired saturation data (Rs, Gs, Bs) in every subpixel. For example, the pixel saturation data (Sout) may be set to the maximum value of the desired saturation data (Rs, Gs, Bs) in every subpixel, or set to a predetermined value corresponding to a difference between the maximum value and the minimum value of the desired saturation data (Rs, Gs, Bs) in every subpixel.

The pixel saturation data (Sout) generated in the first operator unit 430 may then be supplied to the second operator unit 440. The second operator unit 440 may extract the changed input image data (R'G'B' Data) from the reference look-up table unit 445 so as to correspond to the pixel saturation data (Sout) and the selection signal (Ssel) supplied from the first operator unit 430 and the control unit 420, respectively. The second operator unit 440 may further store the extracted changed input image data (R'G'B' Data) in the memory 450.

The second operator unit 440 may select one of a first saturation and luminance look-up tables (LUTs) and a second saturation and luminance LUTs provided in the reference look-up table unit 445 to correspond to the selection signal (Ssel). The second operator unit 440 may extract the changed data (R'G'B' Data) from the selected LUTs, so that the changed data (R'G'B' Data) having the saturation and luminance values may correspond to the pixel saturation data (Sout). The saturation LUTs and the luminance LUTs may represent tables to extract a saturation change value and a luminance change value, respectively. The first saturation and luminance LUTs and the second saturation and luminance LUTs may store different saturation and luminance values to correspond to the pixel saturation data (Sout). For example, the first saturation and luminance LUTs, selected by the selection signal (Ssel) in selecting the third mode, may be set to have lower saturation and/or luminance values than the second saturation and luminance LUTs selected by the selection signal (Ssel) in selecting the second mode.

Further, the second operator unit 440 may extract the changed input image data (R'G'B' Data) by referring to two values of the pixel saturation data (Sout) out of the values stored in the reference look-up table unit 445. For example, the second operator unit 440 may extract the changed input image data (R'G'B' Data) by linearly interpolating between a maximum value out of smaller values of the input pixel saturation data (Sout) and a minimum value out of larger values of the input pixel saturation data (Sout).

The memory 450 may store the initial input image data (RGB Data) transmitted from the control unit 420, or the changed input image data (R'G'B' Data) supplied from the second operator unit 440. The initial input image data (RGB Data) or the changed data (R'G'B' Data) stored in the memory 450 may be input to the data driver 300.

FIG. 3A to FIG. 3D illustrate matrices of a desired saturation data in a subpixel calculated in the first operator unit 430 by using the saturation variable matrix A.

Referring to FIG. 3A to FIG. 3D, the first operator unit 430 may calculate the desired saturation data (Rs, Gs, Bs) in every subpixel by multiplying each of the input data (Rin, Gin, Bin) and the saturation variable matrix A in every subpixel.

The saturation variable matrix A may be a matrix for controlling the saturation by using a saturation coefficient (k) to determine a saturation adjustment. Further, the saturation variable matrix A may be used to calculate each of the desired saturation data (Rs, Gs, Bs) in every subpixel by changing values of the input data (Rin, Gin, Bin) in every subpixel through a previously selected saturation coefficient (k).

The saturation variable matrix A may be selected according to a white balance of the pixels. In other words, the first operator unit 430 may calculate the desired saturation data (Rs, Gs, Bs) in every subpixel by multiplying the saturation variable matrix A and the input data (Rin, Gin, Bin) in every subpixel (as illustrated in FIG. 3B).

Further, the saturation may be increased if the saturation coefficient (k) has a value larger than 1 and, alternatively, may be decreased if the saturation coefficient (k) has a value smaller than 1. When the saturation coefficient (k) has a value of 1, then the saturation may remain the same, i.e., unchanged, because the saturation variable matrix A is a 3 × 3 unit matrix (as illustrated in FIG. 3C). When the saturation coefficient (k) has a value of 0, then the desired saturation data (Rs, Gs, Bs) in every subpixel may be changed into a saturation-free grey image because the desired saturation data (Rs, Gs, Bs) in every subpixel may be set to the same ratio as the white balance (as illustrated in FIG. 3D). The saturation factor k determining the degree of saturation change can be freely determined by a planner and also it can be determined to display the optimum visibility according to an experiment: for example, when the display device displays an image under various conditions a saturation variation may be adjusted to the corresponding visibility to determine the optimum saturation factor k.

Referring back to FIG. 2, if the optical sensor signal (Ssens) corresponding to the intensity of ambient light is input from the optical sensor 500 to the comparator 410, the comparator 410 may compare the optical sensor signal (Ssens) to the predetermined reference values to generate the selection signal (Ssel) for selecting one of at least three modes. In particular, the selection signal (Ssel) may be set to select: a) the first mode, if the optical sensor signal (Ssens) corresponds to a weak intensity of ambient light; b) the second mode, if the optical sensor signal (Ssens) corresponds to a large intensity of ambient light; and c) the third mode, if the optical sensor signal (Ssens) corresponds to a value between the weak and large intensity of ambient light. In the first mode the input image data (RGB Data) may remain the same, e.g., unchanged, and in the second and third modes the input image data (RGB Data) may be changed, i.e. at least one of luminance and saturation of the input image data (RGB Data) may be changed.

Now an operation for driving the data conversion unit 400 will be discussed in detail.

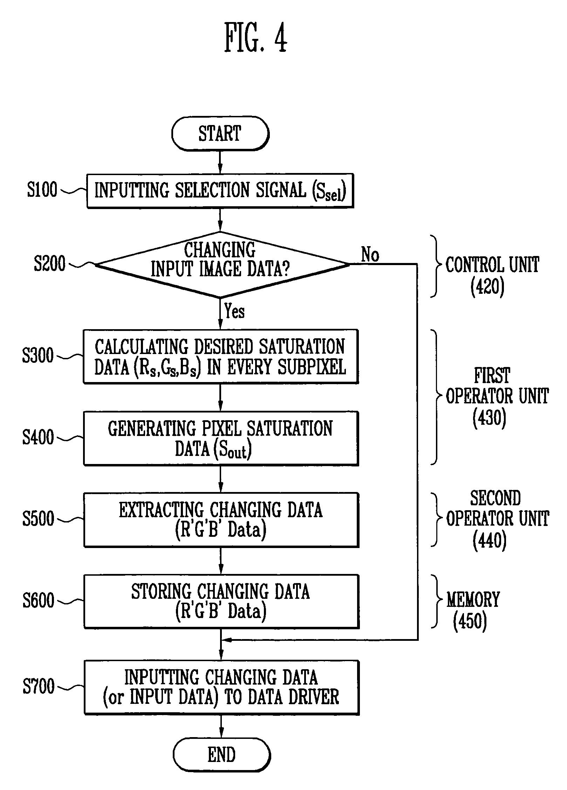

Referring to FIG. 4, in S 100, the selection signal (Ssel) generated in the comparator 410 may be input to the control unit 420.

In S200, the control unit 420 receiving the selection signal (Ssel) may determine whether or not to change the initial input image data (RGB Data), so as to correspond to the selection signal (Ssel). Accordingly, if the selection signal (Ssel) selects the first mode and inputs to the control unit 420, the control unit 420 may supply the initial input image data (RGB Data) to the data driver 300 without changing the initial input image data (RGB Data). Further, the initial input image data (RGB Data) may be temporarily stored in the memory 450 by the control unit 420 and then input to the data driver 300.

Further, the control unit 420 may transmit the initial input image data (RGB Data) to the first operator unit 430, or may alternatively transmit the received selection signal (Ssel) to the second operator unit 440 (if the selection signal (Ssel) for selecting the second or third mode is input to the control unit 420).

In S300, the first operator unit 430 may calculate the desired saturation data (Rs, Gs, Bs) in every subpixel by carrying out an operation on the initial input data (Rin, Gin, Bin) and the saturation variable matrix A.

In S400, the first operator unit 430 may further generate a pixel saturation data (Sout) corresponding to the desired saturation data (Rs, Gs, Bs). The first operator unit 430 may also supply the generated pixel saturation data (Sout) to the second operator unit 440.

In S500, the second operator unit 440 may then extract the changed input image data (R'G'B' Data) to change the saturation and/or luminance of the initial input image data (RGB Data) from the reference look-up table unit 445. The second operator unit 440 may also store the extracted changed data (R'G'B' Data) corresponding to the selection signal (Ssel) and the pixel saturation data (Sout) in the memory 450. In particular, the second operator unit 440 may select one of at least two saturation and luminance LUTs stored in the reference look-up table unit 445 and may extract the changed input image data (R'G'B' Data) from the selected look-up table to correspond to the selection signal (Ssel).

If the changed input image data (R'G'B' Data) corresponding to the pixel saturation data (Sout) supplied from the first operator unit 430 is not stored in the reference look-up table unit 445, then the second operator unit 440 may extract the changed input image data (R'G'B' Data) corresponding to the pixel saturation data (Sout) using linear interpolations. The extracted changed input image data (R'G'B' Data) may be stored in the memory 450, in S600.

In S700, the changed input image data (R'G'B' Data) stored in the memory 450 may be input to the data driver 300 and then used to generate a data signal.

Exemplary embodiments of the present invention relate to an OLED display device and driving methods thereof, having improved visibility by changing input image data to correspond to surrounding environments, e.g., intensity of ambient light. The OLED display device and driving methods thereof may further improve visibility under ambient light by generating a changed input image data to enhance saturation and the like. The OLED display device and driving methods thereof may further improve visibility under ambient light by displaying images corresponding to a generated changed input image data when the OLED display device is exposed to ambient light having a greater illumination intensity value than a predetermined reference value. The OLED display device and driving methods thereof may further improve the response to intensity variations of ambient light by selecting one of at least three modes for controlling an input image data to be changed.

Exemplary embodiments have been disclosed herein, and although specific terms are employed, they are used and are to be interpreted in a generic and descriptive sense only and not for purpose of limitation. Accordingly, it will be understood by those of ordinary skill in the art that various changes in form and details may be made without departing from the scope of the present invention as set forth in the following claims.

## Claims

1. An organic light emitting diode (OLED) display device, comprising:
a pixel unit (100) including a plurality of pixels (110) connected to scan lines (S1, S2, Sn) and data lines (D1, D2, Dm);
a scan driver (200) adapted to generate and supply scan signals to the scan lines (S1, S2, Sn);
a data driver (300) adapted to generate and supply data signals to the data lines (D 1, D2, Dm);
an optical sensor (500) adapted to generate an optical sensor signal (Ssens) corresponding to an intensity of light of the environment; and
wherein the data driver (300) is adapted to generate the data signals to correspond to the input image data (RGB Data) or changed input image data (R'G'B' Data) stored in a data conversion unit (400), wherein the changed input image data (R'G'B' Data) is obtained by changing a luminance value and/or a saturation value of the input image data (RGB),
**characterized in that**
the data conversion unit (400) comprises:
a comparator (410);
a control unit (420);
a first operator unit (430),
a second operator unit (440), and
a memory (450) adapted to store the input image data (RGB Data) transmitted from the control unit (420) or the changed input image data (R'G'B' Data) supplied from the second operator unit (440) and to supply the stored data to the data driver (300);
wherein the data conversion unit (400) is adapted to compare the optical sensor signal (Ssens) with a minimum reference value, corresponding to a weak light intensity, and a maximum reference value, corresponding to a large light intensity, so as to generate a selection signal (Ssel) for selecting one of at least three light intensity modes,
wherein the selection signal (Ssel) corresponds to the first light intensity mode, when the optical sensor signal (Ssens) is below or equal to the minimum reference value,
wherein the selection signal (Ssel) corresponds to the second light intensity mode, when the optical sensor signal (Ssens) is above or equal to the maximum reference value, and
wherein the selection signal (Ssel) corresponds to the third light intensity mode, when the optical sensor signal (Ssens) is above the minimum reference value and below the maximum reference value, and
wherein the control unit (420) is adapted to determine whether a change in the input image data (RGB Data) is required according to the selection signal (Ssel) and to store the input image data (RGB Data) in the memory (450) in the first light intensity mode and transmit the input image data (RGB Data) to the first operator unit (430) and to transmit the selection signal (Ssel) to the second operator unit (440) in the second and third light intensity modes;
wherein the first operator unit (430) is adapted to calculate desired saturation data (Rs, Gs, Bs) in every subpixel by performing an operation on a saturation variable matrix (A, 435) and on an input data (Rin, Gin, Bin) in every subpixel included in the input image data (RGB Data) received from the controller (420) and to generate a pixel saturation data (Sout) from the desired saturation data (Rs, Gs, Bs);
wherein the second operator unit (440) is adapted
to select, from a reference look-up fable unit (445) including a first saturation and luminance look-up tables and a second saturation and luminance look-up tables, the first saturation and luminance look-up tables when the selection signal (Ssel) corresponds to a third light intensity mode, or the second saturation and luminance look- up tables when the selection signal (Ssel) corresponds to a second light intensity mode,
to extract the changed input image data (R'G'B' Data) corresponding to the pixel saturation data (Sout) from the selected look-up tables, and
to supply the changed input image data (R'G'B' Data) to the memory (450).

2. The OLED display device as claimed in claim 1, wherein the luminosity of the changed input image data (R'G'B' Data) in the third light intensity mode is set to a lower value than in the second light intensity mode.

3. The OLED display device as claimed in claim 1, wherein the second operator unit (440) is adapted to extract the changed input image data (R'G'B' Data) by linearly interpolating between two values of the pixel saturation data stored in the reference look-up table unit (445), if a pixel saturation data (Sout) that is not stored in the reference look-up table unit (445) is input.

4. A method for driving an organic light emitting diode (OLED) display device, comprising:
supplying scan signals to scan lines (S1, S2, Sn) generated by a scan driver (200);
supplying data signals to data lines (D1, D2, Dm) generated by a data driver (300);
generating an optical sensing signal (Ssens) corresponding to an intensity of light of the environment sensed by an optical sensor (500);
comparing the optical sensing signal (Ssens) to predetermined reference values, the predetermined reference values comprising a minimum reference value, corresponding to a weak light intensity, and a maximun reference value, corresponding to a large light intensity;
generating a selection signal (Ssel) corresponding to a first light intensity mode, when the optical sensor signal (Ssens) is below or equal to the minimum reference value,
generating a selection signal (Ssel) corresponding to a second light intensity mode, when the optical sensor signal (Ssens) is above or equal to the maximum reference value, and
generating a selection signal (Ssel) corresponding to a third light intensity mode, when the optical sensor signal (Ssens) is above the minimum reference value and below the maximum reference value;
determining whether a change in an input image data (RGB Data) is required according to the selection signal (Ssel);
changing the input image data (RGB Data) when the selection signal (Ssel) corresponds to the second or third light intensity mode;
extracting the changed input image data (R'G'B' Data) by changing at least one of a saturation and a luminance of the input image data (RGB Data), when the selection signal (Ssel) indicates that the input image data (RGB Data) has to be changed; and
storing an input image data (RGB Data) or a changed input image data (R'G'B' Data) according to the selection signal (Ssel) and supplying the stored data to the data driver (300),
wherein the data driver (300) generates the data signals to correspond to the input image data (RGB Data) or the changed input image data (R'G'B' Data) stored in a data conversion unit (400),
**characterized in that**
extracting the changed input image data (R'G'B' Data) further comprises:
calculating desired saturation data (Rs, Gs, Bs) in every subpixel by performing an operation on a saturation variable matrix (A, 435) and on an input data (Rin, Gin, Bin) in every subpixel included in the input image data (RGB Data) received from the controller (420);
generating a pixel saturation data (Sout) from the desired saturation data (Rs, Gs, Bs) in every subpixel;
selecting from a reference look-up table unit (445) comprising first saturation and luminance look-up tables and second saturation and luminance look-up tables the selection signal (Ssel), the first saturation and luminance look-up tables when the selection signal (Ssel) corresponds to a third light intensity mode, or the second saturation and luminance look- up tables when the selection signal (Ssel) corresponds to a second light intensity mode;
extracting the changed input image data (R'G'B' Data) corresponding to the pixel saturation data (Sout) from the selected look-up tables; and
supplying the changed input image data (R'G'B' Data) to the memory (450).

5. The method for driving the OLED display device as claimed in claim 4, further comprising extracting the changed input image data (R'G'B' Data) by linearly interpolating between two values of the pixel saturation data among values stored in the reference look-up table unit (445) if a pixel saturation data (Sout) not stored in the reference look-up table unit (445) is input.

6. The method for driving the OLED display device as claimed in one of claims 4 and 5, wherein the input image data (RGB Data) remains unchanged when the selection signal (Ssel) corresponds to the first light intensity mode, and at least one of luminosity and saturation of the input image data (RGB Data) is changed when the selection signal (Ssel) corresponds to the second or third light intensity mode.

## Patentansprüche

1. Organische lichtemittierende Dioden (OLED)-Anzeigevorrichtung, aufweisend:
eine Pixeleinheit (100), die eine Vielzahl von Pixeln (110) aufweist, die mit Ansteuerleitungen (S1, S2, Sn) und Datenleitungen (D1, D2, Dm) verbunden sind;
einen Ansteuertreiber (200), der ausgebildet ist, Ansteuersignale zu erzeugen und an die Ansteuerleitungen (S 1, S2, Sn) anzulegen;
einen Datentreiber (300), der ausgebildet ist, Datensignale zu erzeugen und an die Datenleitungen (D1, D2, Dm) anzulegen;
einen optischen Sensor (500), der ausgebildet ist, ein optisches Sensorsignal (Ssens) entsprechend einer Intensität von Umgebungslicht zu erzeugen; und
wobei der Datentreiber (300) ausgebildet ist, die Datensignale derart zu erzeugen, dass sie den Eingangsbilddaten (RGB-Daten) oder geänderten Eingangsbilddaten (R'G'B'-Daten), die in einer Datenkonvertierungseinheit (400) gespeichert sind, entsprechen, wobei man die geänderten Eingangsbilddaten (R'G'B'-Daten) durch die Ändeung eines Leuchtdichtewerts und/oder eines Sättigungswerts der Eingangsbilddaten (RGB) erhält,
**dadurch gekennzeichnet, dass**
die Datenkonvertierungseinheit (400) aufweist:
einen Komparator (410);
eine Steuereinheit (420);
eine erste Operatoreinheit (430),
eine zweite Operatoreinheit (440), und
eine Speichervorrichtung (450), die ausgebildet ist, die von der Steuereinheit (420) übertragenen Eingangsbilddaten (RGB-Daten) oder die von der zweiten Operatoreinheit (440) gelieferten geänderten Eingangsbilddaten (R'G'B'-Daten) zu speichern und den Datentreiber (300) mit den gespeicherten Daten zu versorgen;
wobei die Datenkonvertierungseinheit (400) ausgebildet ist, das optische Sensorsignal (Ssens) mit einem minimalen Referenzwert, der einer schwachen Lichtintensität entspricht, und einem maximalen Referenzwert, der einer großen Lichtintensität entspricht, zu vergleichen, um ein Selektierungssignal (Ssel) zum Selektieren von einem von zumindest drei Lichtintensitätsmodi zu erzeugen,
wobei das Selektierungssignal (Ssel) dem ersten Lichtintensitätsmodus entspricht, wenn das optische Sensorsignal (Ssens) kleiner als der oder gleich dem minimalen Referenzwert ist,
wobei das Selektierungssignal (Ssel) dem zweiten Lichtintensitätsmodus entspricht, wenn das optische Sensorsignal (Ssens) größer als der oder gleich dem minimalen Referenzwert ist, und
wobei das Selektierungssignal (Ssel) dem dritten Lichtintensitätsmodus entspricht, wenn das optische Sensorsignal (Ssens) größer als der minimale Referenzwert und kleiner als der maximale Referenzwert ist, und
wobei die Steuereinheit (420) ausgebildet ist, zu bestimmen, ob gemäß dem Selektierungssignal (Ssel) eine Änderung bei den Eingangsbilddaten (RGB-Daten) erforderlich ist, und die Eingangsbilddaten (RGB-Daten) im ersten Lichtintensitätsmodus in der Speichervorrichtung (450) zu speichern und die Eingangsbilddaten (RGB-Daten) zur ersten Operatoreinheit (430) zu übertragen und das Selektierungssignal (Ssel) im zweiten und dritten Lichtintensitätsmodus zur zweiten Operatoreinheit (440) zu übertragen;
wobei die erste Operatoreinheit (430) ausgebildet ist, gewünschte Sättigungsdaten (Rs, Gs, Bs) in jedem Subpixel durch die Durchführung einer Operation in einer Sättigungsänderungsmatrix (A, 435) und bei Eingangsdaten (Rin, Gin, Bin) in jedem Subpixel, der in den von der Steuervorrichtung (420) erhaltenen Eingangsbilddaten (RGB-Daten) enthalten ist, zu berechnen und Pixelsättigungsdaten (Sout) von den gewünschten Sättigungsdaten (Rs, Gs, Bs) zu erzeugen;
wobei die zweite Operatoreinheit (440) ausgebildet ist,
aus einer Referenznachschlagetabelleneinheit (445), die eine erste Sättigungs- und Leuchtdichte-Nachschlagetabelle und eine zweite Sättigungs- und Leuchtdichte-Nachschlagetabelle aufweist, die erste Sättigungs- und Leuchtdichte-Nachschlagetabelle zu selektieren, wenn das Selektierungssignal (Ssel) einem dritten Lichtintensitätsmodus entspricht, oder die zweite Sättigungs- und Leuchtdichte-Nachschlagetabelle zu selektieren, wenn das Selektierungssignal (Ssel) einem zweiten Lichtintensitätsmodus entspricht,
die geänderten Eingangsbilddaten (R'G'B'-Daten) entsprechend den Pixelsättigungsdaten (Sout) von den selektieren Nachschlagetabellen zu extrahieren, und
die Speichervorrichtung (450) mit den geänderten Eingangsbilddaten (R'G'B'-Daten) zu versorgen.

2. OLED-Anzeigevorrichtung nach Anspruch 1, wobei die Leuchtkraft der geänderten Eingangsbilddaten (R'G'B'-Daten) im dritten Lichtintensitätsmodus auf einen niedrigeren Wert eingestellt ist als im zweiten Lichtintensitätsmodus.

3. OLED-Anzeigevorrichtung nach Anspruch 1, wobei die zweite Operatoreinheit (440) ausgebildet ist, die geänderten Eingangsbilddaten (R'G'B'-Daten) durch die lineare Interpolation zwischen zwei Werten der Pixelsättigungsdaten, die in der Referenznachschlagetabelleneinheit (445) gespeichert sind, zu extrahieren, wenn Pixelsättigungsdaten (Sout) eingegeben werden, die nicht in der Referenznachschlagetabelleneinheit (445) gespeichert sind.

4. Verfahren zur Ansteuerung einer organischen lichtemittierenden Dioden (OLED)-Anzeigevorrichtung, aufweisend:
Anlegen von von einem Ansteuertreiber (200) erzeugten Ansteuersignalen an Ansteuerleitungen (S1, S3, Sn);
Anlegen von von einem Datentreiber (300) erzeugten Datensignalen an Datenleitungen (D1, D2, Dm);
Erzeugen eines optischen Abtastsignals (Ssens) entsprechend einer von einem optischen Sensor (500) erfassten Intensität von Umgebungslicht;
Vergleichen des optischen Abtastsignals (Ssens) mit vorbestimmten Referenzwerten, wobei die vorbestimmten Referenzwerte einen minimalen Referenzwert, der einer schwachen Lichtintensität entspricht, und einen maximalen Referenzwert, der einer großen Lichtintensität entspricht, aufweisen;
Erzeugen eines Selektierungssignals (Ssel) entsprechend einem ersten Lichtintensitätsmodus, wenn das optische Sensorsignal (Ssens) kleiner als der oder gleich dem minimalen Referenzwert ist,
Erzeugen eines Selektierungssignals (Ssel) entsprechend einem zweiten Lichtintensitätsmodus, wenn das optische Sensorsignals (Ssens) größer als der oder gleich dem maximalen Referenzwert ist, und
Erzeugen eines Selektierungssignals (Ssel) entsprechend einem dritten Lichtintensitätsmodus, wenn das optische Sensorsignal (Ssens) größer als der minimale Referenzwert und kleiner als der maximale Referenzwert ist;
Bestimmen, ob gemäß dem Selektierungssignal (Ssel) eine Änderung von Eingangsbilddaten (RGB-Daten) erforderlich ist;
Ändern der Eingangsbilddaten (RGB-Daten), wenn das Selektierungssignal (Ssel) dem zweiten oder dritten Lichtintensitätsmodus entspricht;
Extrahieren der geänderten Eingangsbilddaten (R'G'B-Daten) durch Änderung einer Sättigung und/oder einer Leuchtdichte der Eingangsbilddaten (RGB-Daten), wenn das Selektierungssignal (Ssel) angibt, dass die Eingangsbilddaten (RGB-Daten) geändert werden müssen; und
Speichern von Eingangsbilddaten (RGB-Daten) oder von geänderten Eingangsbilddaten (R'G'B'-Daten) gemäß dem Selektierungssignal (Ssel) und Versorgen des Datentreibers (300) mit den gespeicherten Daten,
wobei der Datentreiber (300) die Datensignale derart erzeugt, dass sie den Eingangsbilddaten (RGB-Daten) oder den geänderten Eingangsbilddaten (R'G'B'-Daten), die in einer Datenkonvertierungseinheit (400) gespeichert sind, entsprechen,
**dadurch gekennzeichnet, dass**
das Extrahieren der geänderten Eingangsbilddaten (R'G'B'Daten) weiterhin aufweist:
Berechnen gewünschter Sättigungsdaten (Rs, Gs, Bs) in jedem Subpixel durch die Durchführung einer Operation in einer Sättigungsänderungsmatrix (A, 435) und bei Eingangsdaten (Rin, Gin, Bin) in jedem Subpixel, der in den von der Steuervorrichtung (420) erhaltenen Eingangsbilddaten (RGB-Daten) enthalten ist;
Erzeugen von Pixelsättigungsdaten (Sout) von den gewünschten Sättigungsdaten (Rs, Gs, Bs) in jedem Subpixel;
Selektieren der ersten Sättigungs- und Leuchtdichte-Nachschlagetabelle aus einer Referenznachschlagetabelleneinheit (445), die eine erste Sättigungs- und Leuchtdichte-Nachschlagetabelle und eine zweite Sättigungs- und Nachschlagetabelle aufweist, wenn das Selektierungssignal (Ssel) einem dritten Lichtintensitätsmodus entspricht, oder der zweiten Sättigungs- und Leuchtdichte-Nachschlagetabelle, wenn das Selektierungssignal (Ssel) einem zweiten Lichtintensitätsmodus entspricht;
Extrahieren der geänderten Eingangsbilddaten (R'G'B'-Daten) von den selektierten Nachschlagetabellen entsprechend den Pixelsättigungsdaten (Sout); und
Versorgen der Speichervorrichtung (450) mit den geänderten Eingangsbilddaten (R'G'B'-Daten).

5. Verfahren zur Ansteuerung der OLED-Anzeigevorrichtung nach Anspruch 4, weiterhin aufweisend das Extrahieren der geänderten Eingangsbilddaten (R'G'B'-Daten) durch die lineare Interpolation zwischen zwei Werten der Pielsättigungsdaten aus Werten, die in der Referenznachschlagetabelleneinheit (445) gespeichert sind, wenn Pixelsättigungsdaten (Sout) eingegeben werden, die nicht in der Referenznachschlagetabelleneinheit (445) gespeichert sind.

6. Verfahren zur Ansteuerung der OLED-Anzeigevorichtung nach einem der Ansprüche 4 und 5, wobei die Eingangsbilddaten (RGB-Daten) unverändert bleiben, wenn das Selektierungssignal (Ssel) dem ersten Lichtintensitätsmodus entspricht, und wobei die Leuchtkraft und/oder die Sättigung der Eingangsbilddaten (RGB-Daten) geändert werden/wird, wenn das Selektierungssignal (Ssel) dem zweiten oder dritten Lichtintensitätsmodus entspricht.

## Revendications

1. Dispositif d'affichage à diodes électroluminescentes organiques (OLED pour "Organic Light Emitting Diode"), comprenant :
une unité (100) de pixels incluant une pluralité de pixels (110) connectés à des lignes de balayage (S1, S2, Sn) et à des lignes de donnée (D1, D2, Dm) ;
un circuit d'attaque de balayage (200) apte à engendrer et à délivrer des signaux de balayage aux lignes de balayage (S1, S2, Sn) ;
un circuit d'attaque de données (300) apte à engendrer et à délivrer des signaux de donnée aux lignes de donnée (D1, D2, Dm) ;
un capteur optique (500) apte à engendrer un signal (Ssens) de capteur optique correspondant à l'intensité de lumière de l'environnement, et
dans lequel le circuit d'attaque de données (300) est apte à engendrer des signaux de donnée pour correspondre à une donnée d'image d'entrée (RGB Data) ou à une donnée d'image d'entrée modifiée (R'G'B' Data) mémorisée dans une unité (400) de conversion de donnée, dans lequel la donnée d'image d'entrée modifiée (R'G'B' Data) s'obtient en changeant la valeur de luminance et/ou la valeur de saturation de la donnée d'image d'entrée (RGB),
**caractérisé en ce que** l'unité (400) de conversion de donnée comprend :
un comparateur (410) ;
une unité (420) de commande ;
une première unité (430) d'opérateur ;
une seconde unité (440) d'opérateur ; et
une mémoire (450) apte à mémoriser la donnée d'image d'entrée (RGB Data) émise par l'unité (420) de commande ou la donnée d'image d'entrée modifiée (R'G'B' Data) délivrée par la seconde unité (440) d'opérateur et à délivrer la donnée mémorisée au circuit attaque de données (300) ;
dans lequel l'unité (400) de conversion de donnée est apte à comparer le signal (Ssens) de capteur optique avec une valeur minimale de référence, correspondant à une faible intensité de lumière, et avec une valeur maximale de référence, correspondant à une forte intensité de lumière, de façon à engendrer un signal (Ssel) de choix pour choisir l'un d'au moins trois modes d'intensité de lumière,
dans lequel le signal (Ssel) de choix correspond au premier mode d'intensité de lumière, lorsque le signal (Ssens) de capteur optique est inférieur ou égal à la valeur minimale de référence,
dans lequel le signal (Ssel) de choix correspond au deuxième mode d'intensité de lumière, lorsque le signal (Ssens) de capteur optique est supérieur ou égal à la valeur maximale de référence, et
dans lequel le signal (Ssel) de choix correspond au troisième mode d'intensité de lumière, lorsque le signal (Ssens) de capteur optique est supérieur à la valeur minimale de référence et inférieur à la valeur maximale de référence, et
dans lequel l'unité (420) de commande est apte à déterminer si une modification de la donnée d'image d'entrée (RGB Data) est nécessaire en fonction du signal (Ssel) de choix et à mémoriser la donnée d'image d'entrée (RGB Data) dans la mémoire (450) dans le premier mode d'intensité de lumière et à transmettre la donnée d'image d'entrée (RGB Data) à la première unité (430) d'opérateur et à transmettre le signal (Ssel) de choix à la seconde unité (440) d'opérateur dans les deuxième et troisième modes d'intensité de lumière ;
dans lequel la première unité (430) d'opérateur est apte à calculer une donnée de saturation voulue (Rs, Gs, Bs) dans chaque sous-pixel en effectuant une opération sur une matrice variable de saturation (A, 435) et sur une donnée d'entrée (Rin, Gin, Bin) de chaque sous-pixel incluse dans la donnée d'image d'entrée (RGB Data) reçue du régisseur (420) et à engendrer une donnée de saturation de pixel (Sout) à partir de la donnée de saturation voulue (Rs, Gs, Bs) ;
dans lequel la seconde unité (440) d'opérateur est apte :
à choisir, à partir d'une unité (445) de tables de consultation de référence incluant une première table de consultation de saturation et de luminance et une seconde table de consultation de saturation et de luminance, la première table de consultation de saturation et de luminance lorsque le signal (Ssel) de choix correspond au troisième mode d'intensité de lumière, ou la seconde table de consultation de saturation et de luminance lorsque le signal (Ssel) de choix correspond au deuxième mode d'intensité de lumière ;
à extraire, de la table de consultation choisie, la donnée d'image d'entrée modifiée (R'G'B' Data) correspondant à la donnée de saturation de pixel (Sout) ; et
à délivrer, à la mémoire (450), la donnée d'image d'entrée modifiée (R'G'B' Data).

2. Dispositif d'affichage à OLED selon la revendication 1, dans lequel la luminosité de la donnée d'image d'entrée modifiée (R'G'B' Data) dans le troisième mode d'intensité de lumière est fixée à une valeur plus basse que dans le deuxième mode d'intensité de lumière.

3. Dispositif d'affichage à OLED selon la revendication 1, dans lequel la seconde unité (440) d'opérateur est apte à extraire la donnée d'image d'entrée modifiée (R'G'B' Data) par interpolation linéaire entre deux valeurs de la donnée de saturation de pixel mémorisées dans l'unité (445) de tables de consultation de référence, si l'on entre une donnée de saturation de pixel (Sout) qui n'est pas mémorisée dans l'unité (445) de tables de consultation de référence.

4. Procédé d'attaque d'un dispositif d'affichage à diodes électroluminescentes organiques (OLED pour "Organic Light Emitting Diode"), comprenant :
la délivrance à des lignes de balayage (S1, S2, Sn) de signaux de balayage engendrés par un circuit d'attaque de balayage (200) ;
la délivrance à des lignes de donnée (D1, D2, Dm) de signaux de donnée engendrés par un circuit d'attaque de données (300) ;
la génération d'un signal (Ssens) de détection optique correspondant à l'intensité de lumière de l'environnement détectée par un capteur optique (500) ;
la comparaison du signal (Ssens) de détection optique à des valeurs prédéterminées de référence, les valeurs prédéterminées de référence comprenant une valeur minimale de référence, correspondant à une faible intensité de lumière, et une valeur maximale de référence, correspondant à une forte intensité de lumière,
la génération d'un signal (Ssel) de choix correspondant à un premier mode d'intensité de lumière, lorsque le signal (Ssens) de capteur optique est inférieur ou égal à la valeur minimale de référence,
la génération d'un signal (Ssel) de choix correspondant à un deuxième mode d'intensité de lumière, lorsque le signal (Ssens) de capteur optique est supérieur ou égal à la valeur maximale de référence, et
la génération d'un signal (Ssel) de choix correspondant à un troisième mode d'intensité de lumière, lorsque le signal (Ssens) de capteur optique est supérieur à la valeur minimale de référence et inférieur à la valeur maximale de référence ;
la détermination de ce qu'une modification de la donnée d'image d'entrée (RGB Data) est ou non nécessaire en fonction du signal (Ssel) de choix ;
la modification de la donnée d'image d'entrée (RGB Data) lorsque le signal (Ssel) de choix correspond au deuxième ou au troisième mode d'intensité de lumière ;
l'extraction de la donnée d'image d'entrée modifiée (R'G'B' Data) en modifiant au moins l'une de la saturation et de la luminance de la donnée d'image d'entrée (RGB Data), lorsque le signal (Ssel) de choix indique que la donnée d'image d'entrée (RGB Data) doit être modifiée ; et
la mémorisation d'une donnée d'image d'entrée (RGB Data) ou d'une donnée d'image d'entrée modifiée (R'G'B' Data) en fonction du signal (Ssel) de choix et la délivrance, au circuit d'attaque de données (300), de la donnée mémorisée,
dans lequel le circuit d'attaque de données (300) engendre les signaux de donnée pour correspondre à la donnée d'image d'entrée (RGB Data) ou à la donnée d'image d'entrée modifiée (R'G'B' Data) mémorisée dans une unité (400) de conversion de donnée,
**caractérisé en ce que** l'extraction de la donnée d'image d'entrée modifiée (R'G'B' Data) comprend en outre :
le calcul d'une donnée de saturation voulue (Rs, Gs, Bs) dans chaque sous-pixel en effectuant une opération sur une matrice variable de saturation (A, 435) et sur une donnée d'entrée (Rin, Gin, Bin) de chaque sous-pixel incluse dans la donnée d'image d'entrée (RGB Data) reçue du régisseur (420) ;
la génération d'une donnée de saturation de pixel (Sout) à partir de la donnée de saturation voulue (Rs, Gs, Bs) de chaque sous-pixel ;
le choix, à partir d'une unité (445) de tables de consultation de référence comprenant des premières tables de consultation de saturation et de luminance et des secondes tables de consultation de saturation et de luminance du signal (Ssel) de choix, des premières tables de consultation de saturation et de luminance lorsque le signal (Ssel) de choix correspond à un troisième mode d'intensité de lumière, ou des secondes tables de consultation de saturation et de luminance lorsque le signal (Ssel) de choix correspond à un deuxième mode d'intensité de lumière ;
l'extraction, des tables de consultation choisies, de la donnée d'image d'entrée modifiée (R'G'B' Data) correspondant à la donnée de saturation de pixel (Sout) ; et
la délivrance, à la mémoire (450), de la donnée d'image d'entrée modifiée (R'G'B' Data).

5. Procédé d'attaque d'un dispositif d'affichage à OLED selon la revendication 4, comprenant en outre l'extraction de la donnée d'image d'entrée modifiée (R'G'B' Data) par interpolation linéaire entre deux valeurs de la donnée de saturation de pixel parmi des valeurs mémorisées dans l'unité (445) de tables de consultation de référence si l'on entre une donnée de saturation de pixel (Sout) non mémorisée dans l'unité (445) de tables de consultation de référence.

6. Procédé d'attaque d'un dispositif d'affichage à OLED selon l'une des revendications 4 et 5, dans lequel la donnée d'image d'entrée (RGB Data) reste non modifiée lorsque le signal (Ssel) de choix correspond au premier mode d'intensité de lumière, et dans lequel on modifie au moins l'une de la luminosité et de la saturation de la donnée d'image d'entrée (RGB Data) lorsque le signal (Ssel) de choix correspond au deuxième ou au troisième mode d'intensité de lumière.
